(19) Europäisches Patentamt
European Patent Office
Office européen des brevets

(11) **EP 3 430 565 B1**

(12) **EUROPÄISCHE PATENTSCHRIFT**

(45) Veröffentlichungstag und Bekanntmachung des Hinweises auf die Patenterteilung:
**25.10.2023 Patentblatt 2023/43**

(21) Anmeldenummer: **17714563.8**

(22) Anmeldetag: **17.03.2017**

(51) Internationale Patentklassifikation (IPC):
***G06V 20/69*** *(2022.01)*

(52) Gemeinsame Patentklassifikation (CPC):
**G06T 7/155; G06T 7/11; G06T 7/136; G06V 20/69;**
G06T 2207/10056; G06T 2207/30024

(86) Internationale Anmeldenummer:
**PCT/IB2017/051554**

(87) Internationale Veröffentlichungsnummer:
**WO 2017/158560 (21.09.2017 Gazette 2017/38)**

(54) **VERFAHREN ZUR UNTERSUCHUNG VERTEILTER OBJEKTE UNTER SEGMENTIERUNG EINES ÜBERSICHTBILDES**

METHOD FOR TESTING DISTRIBUTED OBJECTS BY SEGMENTING AN OVERVIEW IMAGE

PROCÉDÉ D'ÉVALUATION D'OBJETS DISTRIBUÉS EN SEGMENTANT UNE IMAGE DE SYNTHÈSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2016 DE 102016105102**

(43) Veröffentlichungstag der Anmeldung:
**23.01.2019 Patentblatt 2019/04**

(73) Patentinhaber: **Leibniz-Institut für Photonische Technologien e.V.
07745 Jena (DE)**

(72) Erfinder:
• **SCHIE, Iwan W.
07745 Jena (DE)**
• **KRAFFT, Christoph
07745 Jena (DE)**
• **POPP, Jürgen
07751 Jena-Kunitz (DE)**

(74) Vertreter: **Maiwald GmbH
Elisenhof
Elisenstraße 3
80335 München (DE)**

(56) Entgegenhaltungen:
**WO-A1-00/04497    WO-A1-93/16442**
WO-A1-2014/053520    GB-A- 2 423 150
GB-A- 2 466 818

• **SAHOO P K ET AL: "SURVEY OF THRESHOLDING TECHNIQUES", COMPUTER VISION GRAPHICS AND IMAGE PROCESSING, ACADEMIC PRESS, DULUTH, MA, US, Bd. 41, Nr. 2, 1. Februar 1988 (1988-02-01), Seiten 233-260, XP000000250, DOI: 10.1016/0734-189X(88)90022-9**
• **Jonathan Blackledge ET AL: "Targeting Cell Nuclei for the Automation of Raman Spectroscopy in Cytology", Dublin Institute of Technology ISAST Transactions on Computers and Intelligent Systems, 1. Januar 2012 (2012-01-01), Seiten 42-51, XP055378604, Gefunden im Internet: URL:http://arrow.dit.ie/cgi/viewcontent.cg i?article=1205&context=engscheleart [gefunden am 2017-06-06]**
• **NOTINGHER I ET AL: "Multivariate analysis of Raman spectra for in vitro non-invasive studies of living cells", JOURNAL OF MOLECULAR STRUCTURE, ELSEVIER AMSTERDAM, NL, vol. 744-747, 3 June 2005 (2005-06-03), pages 179-185, XP027660063, ISSN: 0022-2860 [retrieved on 2005-06-03]**

EP 3 430 565 B1

**Beschreibung**

Die Erfindung betrifft ein Verfahren zur Untersuchung von Objekten, die in einem Gebiet statistisch verteilt sind.

Stand der Technik

Bei der Untersuchung biologischer Proben kommt es vielfach darauf an, die Eigenschaften individueller Zellen zu studieren. Derartige Proben umfassen in der Regel eine statistische Verteilung von Zellen auf einem Substrat. Bevor eine Zelle untersucht werden kann, muss sie zunächst auf dem Substrat lokalisiert werden.

Bislang wurden die Zellen visuell lokalisiert, und eine lokalisierte Untersuchung einer einzelnen Zelle, beispielsweise mit Raman-Spektroskopie, wurde manuell veranlasst. Dies war sehr zeitintensiv und führte dazu, dass immer nur geringe Anzahlen von Zellen untersucht werden konnten. Je mehr Zellen untersucht werden, desto besser ist die statistische Belastbarkeit der erhaltenen Ergebnisse.

Aus (R. Ali, M. Gooding, T. Szilägyi, B. Vojnovic, M. Christlieb, M. Brady, "Automatic segmentation of adherent biological cell boundaries and nuclei from brightfield microscopy images", Machine Vision and Applications 23 (4), 607-621, doi: 10.1007/s00138-011-0337-9 (2011)), aus (F. Buggenthin, C. Marr, M. Schwarzfischer, P. S. Hoppe, O. Hilsenbeck, T. Schroeder, F. J. Theis, "An automatic method for robust and fast cell detection in bright field images from highthroughput microscopy", BMC Bioinformatics 14, 297-308 (2013)) sowie aus (C. Zhang, J. Yarkony, F. A. Hamprecht, "Cell Detection and Segmentation Using Correlation Clustering", Medical Image Computing and Computer Assisted Intervention - MICCAI 2014, Lecutre Notes in Computer Science 8673, 9-16 (2014)) sind verschiedene Ansätze zur Lokalisierung von Zellen auf einem Substrat bekannt.

GB 2 423 150 A offenbart ein Verfahren, mit dem unter Verwendung morphologischer Operationen auf binären Bildmasken Bilder von Gewebeschnitten automatisch in Beiträge segmentiert werden können, die von unterschiedlichen Gewebeschichten herrühren.

WO 93/16442 A1 offenbart ein ähnliches Verfahren, mit dem einzelne Zellen automatisch in Bildern biologischer Proben lokalisiert werden können.

WO 00/04497 offenbart ein weiteres Verfahren, mit dem die Grenzen von Objekten in Bildern durch blockweise Verarbeitung der Bilder identifiziert werden können.

GB 2 466 818 A offenbart ein weiteres Verfahren, mit dem Bilder biologischer Proben in Beiträge einzelner Zellen segmentiert werden können.

(P. K. Sahoo et al., "Survey of Thresholding Techniques", Computer Vision Graphics and Image Processing, Academic Press, Band 41, Nr. 2, 233-260, doi: 10.1016/0734-189X(88)90022-9 (1988)) ist ein allgemeiner Übersichtsartikel über Verfahren zur Umwandlung digitaler Bilder in binäre Masken.

(J. Blackledge et al., "Targeting Cell Nuclei for the Automation of Raman Spectroscopy in Oncology", Dublin Institute of Technology, ISAST Transactions on Computers and Intelligent Systems, Band 4, Nr. 1, 42-51 (2012)) offenbart ein Verfahren, mit dem einzelne Zellen in einem digitalen Bild einer biologischen Probe lokalisiert werden können, damit sie später individuell mit Raman-Spektroskopie abgefragt werden können.

Aufgabe und Lösung

Aufgabe der vorliegenden Erfindung ist, die vorgenannten Ansätze weiterzuentwickeln und dadurch speziell die substratübergreifende Untersuchung einer Vielzahl von auf mehreren Substraten verteilter Objekte zu verbessern.

Diese Aufgabe wird erfindungsgemäß gelöst durch ein Verfahren gemäß Hauptanspruch und durch ein Computerprogrammprodukt gemäß Nebenanspruch. Weitere vorteilhafte Ausgestaltungen ergeben sich aus den darauf rückbezogenen Unteransprüchen.

Gegenstand der Erfindung

Im Rahmen der Erfindung wurde ein Verfahren zur Untersuchung einer Vielzahl verteilter Objekte unter Nutzung eines Übersichtsbildes des Gebiets, in dem die Objekte verteilt sind, entwickelt.

Das Gebiet befindet sich auf einem Substrat, auf dem die Objekte aufgebracht sind. Die Objekte sind biologische Zellen, insbesondere eukaryotische Zellen, die beispielsweise in einer Lösung oder als Suspension in einem Lösungsmittel auf das Substrat aufgebracht sind. Dabei können die Zellen am Substrat anhaften (adhärieren), also mit dem Substrat eine Verbindung eingehen, oder vom Substrat separate Einheiten bleiben, die lediglich durch schwache physikalische Kräfte an einem Ort auf dem Substrat gehalten werden. Wie die Zellen an das Substrat gebunden sind, lässt sich optional auch durch Aufbringen einer Beschichtung auf das Substrat maßschneidern. Beispielsweise kann mit poly-L-Lysin oder poly-D-Lysin als Beschichtung bewirkt werden, dass Zellen nicht am Substrat adhärieren, und/oder dass Zellen an einer bestimmten Position auf dem Substrat verbleiben, obwohl sie dort nicht adhärieren.

Prinzipiell lassen sich nicht nur Objekte biologischer Natur untersuchen, sondern beispielsweise auch Staubpartikel, die etwa mit einem Filter oder einer Klebefolie gesammelt wurden.

Das Übersichtsbild ist vorteilhaft ein Bild, in dem das gesamte Gebiet, in dem die Objekte verteilt sind, parallel erfasst und abgebildet ist. Es kann insbesondere eine mikroskopische Hellfeldaufnahme des Gebiets sein. Eine solche Aufnahme ist schnell erhältlich, und die Bildgebung beeinflusst weder die Objekte selbst noch ihre Positionen in dem Gebiet. Grundsätzlich kann das Übersichtsbild aber auch mit jedem anderen Verfahren gewonnen werden, beispielsweise mit Fluoreszenzmikroskopie oder Rastersondenmikroskopie. Die Betriebsparameter sind dann lediglich so zu wählen, dass die Objekte im Wesentlichen unverändert bleiben und ihre Position in dem Gebiet nicht wechseln.

Das Übersichtsbild kann insbesondere ein Graustufenbild sein, in dem jedem Pixel genau ein Intensitätswert zugeordnet ist. Das Übersichtsbild kann aber beispielsweise auch ein Farbbild sein. Ein Farbbild kann als Zusammenfassung aus mehreren Kanälen aufgefasst werden, wobei in jedem Kanal eine bestimmte Eigenschaft analog einem Graustufenbild von Pixel zu Pixel variiert. Ein Farbbild kann beispielsweise eine Überlagerung aus mehreren Subbildern sein, die jeweils einer Grundfarbe zugeordnet sind, etwa rot, grün und blau bei einem RGB-Farbbild oder Cyan, Magenta, Gelb und Schwarz bei einem CMYK-Farbbild. Im HSV-Farbraum sind drei Subbilder vorhanden, die die räumliche Verteilung der drei Eigenschaften Farbwert (hue), Farbsättigung (saturation) und Helligkeitswert (value) jeweils analog einem Graustufenbild wiedergeben. Für die weitere Untersuchung kann nun jeweils ein einzelnes dieser Subbilder oder aber eine Verrechnung mehrerer oder aller Subbilder zu einem Graustufenbild herangezogen werden. Ohne Beschränkung der Allgemeinheit wird im Folgenden davon ausgegangen, dass ein Graustufenbild vorliegt.

Die Objekte können in dem Gebiet in beliebiger Konzentration verteilt sein. Welche Konzentration sinnvoll ist, hängt von der jeweiligen Anwendung ab. Bei der Untersuchung möglicher krankhafter Veränderungen biologischer Zellen etwa kommt es auf darauf an, Zellen individuell zu untersuchen. Es ist dann sinnvoll, wenn die Konzentration der Zellen nur so groß ist, dass zumindest die meisten Zellen in dem Gebiet noch eindeutig voneinander unterscheidbar sind. Werden hingegen beispielsweise Staubpartikel untersucht, um etwa nach Asbest zu suchen, ist es weniger erheblich, ob es zu Zusammenballungen von Partikeln kommt.

Die Verteilung der Objekte kann insbesondere statistisch sein. Sie kann aber auch beispielsweise selbstorganisiert sein, oder die Objekte können beispielsweise auch ganz oder teilweise an definierten Plätzen auf einem Substrat angeordnet sein, die auf dem Substrat zuvor entsprechend strukturiert wurden.

Erfindungsgemäß wird nun zunächst das Übersichtsbild in ein binäres Bild umgewandelt, indem die Intensitätswerte der Pixel des Übersichtsbildes dahingehend klassifiziert werden, ob sie diesseits oder jenseits einer vorgegebenen Schwelle liegen. Das binäre Bild ordnet also jedem Pixel abhängig davon, zu welcher der beiden Klassen "diesseits" oder "jenseits" es gehört, einen der beiden möglichen Werte 0 oder 1 zu. Ohne Beschränkung der Allgemeinheit kann "diesseits" beispielsweise "kleiner oder gleich der Schwelle" bedeuten und dem Wert 0 zugeordnet sein, und "jenseits" kann "größer als die Schwelle" bedeuten und dem Wert 1 zugeordnet sein.

Das binäre Bild ist ein erster Anhaltspunkt dafür, wo sich Objekte befinden. Um beispielsweise die Kontur von Objekten und damit auch beispielsweise ein zugehöriges Zentrum zu bestimmen, reicht das binäre Bild noch nicht aus. So wird auf Grund der Diskretisierung in nur zwei Klassen eine unmittelbar aus dem binären Bild entnommene Kontur im Allgemeinen Lücken aufweisen. Diese Lücken werden mit der mathematischen Operation des morphologischen Schließens, englisch "Closing" genannt, geschlossen. Dadurch entsteht eine binäre Objektmaske, die angibt, welche Orte des in dem Übersichtsbild abgebildeten Gebiets zu Objekten gehören und welche Orte dieses Gebiets zu keinem Objekt gehören, sondern stattdessen beispielsweise der leeren Substratoberfläche zuzuordnen sind.

Ein real aufgenommenes Übersichtsbild ist jedoch im Allgemeinen nicht frei von Fehlern oder Artefakten, etwa auf Grund von Rauschen. Solche Fehler und Artefakte erzeugen Strukturen, die kleiner sind als die Objekte. Wird auf diese Strukturen nun das morphologische Schließen angewendet, können sie zu einer Größe anwachsen, die mit der der gesuchten Objekte vergleichbar ist. Die Fehler und Artefakte wären in der binären Objektmaske also nicht mehr von den echten Objekten zu unterscheiden.

Um dies zu vermeiden, wird erfindungsgemäß das binäre Bild um Strukturen bereinigt, die kleiner sind als die Objekte, so dass ein bereinigtes Bild entsteht. Erst dieses bereinigte Bild wird zur binären Objektmaske weiterverarbeitet. Es wird also nach der Erzeugung des binären Bildes die Zusatzinformation, welche Größe die gesuchten Objekte mindestens haben, ausgenutzt, um diese Objekte von Fehlern und Artefakten zu unterscheiden. Die Erfinder haben erkannt, dass die Berücksichtigung einer derartigen Zusatzinformation gerade zu diesem Zeitpunkt im Verfahren am wirkungsvollsten ist und eine besonders zuverlässige Unterscheidung ermöglicht. Im Ergebnis ist die erhaltene binäre Objektmaske ein besonders verlässlicher Indikator dafür, welche Orte des im Übersichtsbild abgebildeten Gebiets zu Objekten zugehörig sind.

Die Bereinigung ist besonders dann wichtig, wenn die binäre Objektmaske zur Festlegung verwendet wird, an welchen Orten beispielsweise Raman-Spektren aufgenommen werden. Die Anzahl der vor der Bereinigung vorhandenen Störungen und Artefakte ist meistens um ein Vielfaches höher als die Anzahl der zu untersuchenden Objekte. Werden diese Störungen und Artefakte fälschlicherweise als Objekte erkannt, wird möglicherweise eine Vielzahl nicht relevanter Raman-Spektren aufgenommen. Dies kostet nicht nur unnötige Zeit, sondern erschwert auch die statistische Analyse der Spektren oder macht diese Analyse sogar unmöglich.

Bereits aus der binären Objektmaske lassen sich viele Informationen über die Objekte ableiten. Beispielsweise sind aus der binären Objektmaske die genaue Größe und Form der Objekte ersichtlich. Auch ist aus dem Anteil der zu Objekten gehörenden Orte (Pixel) die Konzentration der Objekte in dem Gebiet ersichtlich. Die binäre Objektmaske kann jedoch auch als Vorprodukt verwendet werden, um diejenigen Orte festzulegen, an denen weitere Untersuchungen durchgeführt werden.

Zur Festlegung der vorgegebenen Schwelle haben sich in den Versuchen der Erfinder drei Methoden als besonders vorteilhaft und zuverlässig herausgestellt. Alle drei Methoden basieren auf der Auswertung von Histogrammen über die Intensitätswerte der Pixel des Übersichtsbildes. Diese Intensitätswerte sind in der Regel auf eine bestimmte Anzahl möglicher Werte diskretisiert, beispielsweise ganzzahlige Werte von 0 bis 255 für 8 Bit Auflösung und von 0 bis 65535 für 16 Bit Auflösung.

Gemäß der ersten Methode wird die Schwelle derart festgelegt, dass sie in der Mitte zwischen einem ersten Mittelwert $m_0$ aller Intensitätswerte von Pixeln (201a) des Übersichtsbildes, die unterhalb der Schwelle liegen, und einem zweiten Mittelwert $m_1$ aller Intensitätswerte von Pixeln des Übersichtsbildes, die oberhalb der Schwelle liegen, liegt. Dies kann als selbstkonsistente Bedingung für die Schwelle aufgefasst werden, denn die Mittelwerte $m_0$ und $m_1$ hängen wiederum von der Schwelle ab. Der Vorteil dieser Methode liegt speziell im Zusammenhang mit mikroskopischen Hellfeldaufnahmen als Übersichtsbildern darin, dass sich die Beleuchtungsverhältnisse besonders gering auf die letztendlich erhaltene binäre Objektmaske auswirken.

Die richtige Schwelle kann beispielsweise ermittelt werden, indem für alle möglichen diskreten Werte der Schwelle getestet wird, wie gut die selbstkonsistente Bedingung erfüllt ist. Es wird diejenige Schwelle gewählt, für die die Bedingung am besten erfüllt ist. Der hierfür erforderliche Rechenzeitbedarf hängt davon ab, wie fein die Intensitätswerte des Übersichtsbildes diskretisiert sind, denn es sind genauso viele Schwellenwerte möglich wie es mögliche Intensitätswerte gibt. Sind die Intensitätswerte sehr fein diskretisiert, kann alternativ zum Testen aller möglichen Werte auch ein Optimierungsalgorithmus verwendet werden, der die Erfüllung der selbstkonsistenten Bedingung als Gütemaß verwendet.

Gemäß der zweiten Methode wird die Schwelle derart festgelegt, dass die Summe aus einer ersten Varianz aller Intensitätswerte von Pixeln des Übersichtsbildes, die unterhalb der Schwelle liegen, gewichtet mit der Anzahl dieser Intensitätswerte, und einer zweiten Varianz aller Intensitätswerte von Pixeln des Übersichtsbildes, die oberhalb der Schwelle liegen, gewichtet mit der Anzahl dieser Intensitätswerte, minimiert wird. Sind $\omega_{0,1}(s)$ die vom Wert s der Schwelle abhängigen Wahrscheinlichkeiten, dass ein Intensitätswert eines Pixels zur Klasse 0 bzw. 1 gehört, und sind $\sigma_{0,1}^2(s)$ die Varianzen der Pixel innerhalb dieser Klassen, die ebenfalls jeweils vom Wert s der Schwelle abhängen, so ist die gewichtete Summe $\sigma_w^2(s)$ gegeben durch

$$\sigma_w^2(s) = \omega_0(s) \cdot \sigma_0^2(s) + \omega_1(s) \cdot \sigma_1^2(s).$$

Auch die Minimierung dieser gewichteten Summe ist eine selbstkonsistente Bedingung, denn welche Intensitätswerte oberhalb bzw. unterhalb der Schwelle liegen, hängt jeweils wiederum vom Schwellwert ab. In dieser Bedingung steckt die durch die typische Gestalt von experimentell bestimmten Übersichtsbildern motivierte Annahme, dass sich in dem Übersichtsbild der größte Kontrast zwischen Objekten einerseits und zu keinem Objekt gehörenden Bereichen andererseits einstellt, während gemessen hieran die zu keinem Objekt gehörenden Bereiche, wie auch die Objekte, jeweils für sich genommen vergleichsweise homogen sind. Dementsprechend ist die Minimierung der Intraklassenvarianz ein plausibler Indikator dafür, dass die im Übersichtsbild abgebildeten Orte, die durch die Pixel des Übersichtsbildes repräsentiert werden, sinnvoll in die beiden Klassen "Objekt" und "kein Objekt" aufgeteilt wurden.

Diese Bedingung ist nach den Arbeiten von Otsu damit äquivalent, dass die Interklassenvarianz zwischen den unterhalb der Schwelle liegenden Intensitätswerten einerseits und den oberhalb der Schwelle liegenden Intensitätswerten andererseits maximiert wird. Die Interklassenvarianz $\sigma_i^2(s)$ ist gegeben durch

$$\sigma_i^2(s) = \omega_0(s) \cdot \omega_1(s) \cdot \left[m_0(s) - m_1(s)\right]^2,$$

worin - analog zur ersten Methode - $m_0(s)$ und $m_i(s)$ wieder die vom Wert s der Schwelle abhängigen Klassenmittelwerte sind. Die Interklassenvarianz lässt sich mit geringerem Rechenaufwand bestimmen als die Summe beider Intraklassenvarianzen.

Gemäß der dritten Methode wird die Schwelle derart festgelegt, dass die Übereinstimmung mindestens eines statistischen Moments des binären Bildes mit dem entsprechenden statistischen Moment des Übersichtsbildes maximiert wird. Dieses statistische Moment kann beispielsweise der Mittelwert oder die Varianz sein. Diese Methode geht ähnlich wie die zweite Methode von der Grundannahme aus, dass sich ein Kontrast im Übersichtsbild im Wesentlichen zwischen den Objekten und den zu keinem Objekt gehörenden Bereichen zeigen sollte, während die Objekte selbst, sowie auch die zu keinem Objekt gehörenden Bereiche, jeweils vergleichsweise homogen sein sollten. Das ideale Übersichtsbild sollte also näherungsweise ein binäres Bild sein, das unmittelbar als binäre Objektmaske verwendbar ist. Das reale Übersichtsbild wird als durch den Abbildungsprozess weichgezeichnete (verwaschene) Version dieses idealen binären Übersichtsbildes angesehen, wobei das Weichzeichnen ohne Einfluss auf das statistische Moment ist. Indem also das statistische Moment als Erhaltungsgröße gewählt wird, wird der Informationsgehalt in Bezug auf die Unterscheidung zwischen Objekten und zu keinem Objekt gehörenden Bereichen nicht verändert, sondern nur klarer herausgearbeitet. Dementsprechend ist die dritte Methode besonders vorteilhaft, wenn das Übersichtsbild nur einen geringen Kontrast aufweist.

Alle drei Methoden können auch in Kombination verwendet werden, und/oder die jeweils bestimmten Werte s für die Schwelle können miteinander zu einem Gesamtwert verrechnet werden, der auf das binäre Bild angewendet wird.

In einer besonders vorteilhaften Ausgestaltung der Erfindung wird aus dem Übersichtsbild durch Weichzeichnen mit einer Stärke, die die Objekte im Wesentlichen entfernt, eine Untergrundabschätzung gewonnen, und das Übersichtsbild wird vor der Umwandlung in das binäre Bild durch seine Differenz zu der Untergrundabschätzung ersetzt. Auf diese Weise wird der Einfluss einer ungleichmäßigen Beleuchtung auf die letztendlich erhaltene binäre Objektmaske weiter zurückgedrängt. Es gehen dann also nach Bildung des Differenzbildes alle weiteren Operationen nur noch von diesem Differenzbild aus und nicht mehr vom ursprünglichen Übersichtsbild.

Alternativ oder in Kombination kann eine Untergrundabschätzung durch Aufnahme eines zweiten Übersichtsbildes, welches frei von Objekten ist, gewonnen werden. Die Untergrundabschätzung liegt dann als Untergrundbild vor. Jedes Pixel dieses Untergrundbildes kann dann beispielsweise auf die Höchst-Intensität des Untergrundbildes normiert werden. Das Übersichtsbild kann dann vor der Umwandlung in das binäre Bild punktweise durch die normierte Untergrundabschätzung dividiert werden.

In einer weiteren besonders vorteilhaften Ausgestaltung der Erfindung wird in der binären Objektmaske mindestens eine gemeinsame Grenze aneinander grenzender Objekte in eine erste Grenze des ersten Objekts und eine zweite Grenze des zweiten Objekts aufgespalten. Auf diese Weise können Objekte auch dann separat voneinander erkannt und studiert werden, wenn ihre Konzentration in dem im Übersichtsbild abgebildeten Gebiet so hoch ist, dass sie agglomeriert sind. Zu diesem Zweck kann beispielsweise die Wasserscheidentransformation angewendet werden, die die Pixelwerte 0 und 1 der binären Objektmaske als Höheninformation interpretiert und bei einer sukzessiven "Flutung" Wasserscheiden zwischen benachbarten Objekten herausarbeitet.

Vorteilhaft wird aus der binären Objektmaske der Mittelpunkt mindestens eines Objekts ausgewertet. Dieser Punkt ist für viele weitergehende Untersuchungen des Objekts wichtig.

Mindestens ein Ort in dem Gebiet, an dem sich laut der binären Objektmaske ein Objekt befindet, wird mit einem Lichtstrahl bestrahlt, und die Antwort des Objekts auf die Bestrahlung wird ausgewertet. Der Lichtstrahl kann hierbei insbesondere ein Laserstrahl sein. Die Untersuchung mit einem Lichtstrahl ist nichtinvasiv und kann mit hoher Ortsauflösung bis hinab zur Beugungsgrenze des verwendeten Lichtstrahls erfolgen. Die Beugungsgrenze kann ggfs. noch durch den Einsatz von Nahfeldlicht umgangen werden.

Der Lichtstrahl kann aber umgekehrt auch aufgeweitet werden, damit das gesamte Objekt ausgeleuchtet wird. Hier ist es besonders vorteilhaft, wenn das Zentrum des Objektes als Mittelpunkt der Lichtstrahlposition gewählt wird. Um Randeffekten vorzubeugen, kann die Intensitätsverteilung des Lichtstrahls beispielsweise homogenisiert werden, indem mehrere Moden überlagert werden ("mode scrambling"). Alternativ oder in Kombination kann der Lichtstrahl noch weiter aufgeweitet werden, so dass derjenige Teil seines Strahlprofils, der das Objekt ausleuchtet, näherungsweise homogen ist. Dies wiederum geht auf Kosten der Intensität.

In einer weiteren besonders vorteilhaften Ausgestaltung der Erfindung wird der Lichtstrahl an Hand der binären Objektmaske relativ zum Objekt gescannt. Das Scannen kann erfolgen, indem der Laserstrahl gegen das Objekt bewegt wird, indem das Objekt gegen den Laserstrahl bewegt wird oder aber auch indem sowohl der Laserstrahl als auch das Objekt bewegt werden.

Das Zeitprogramm des Scannens wird unter Berücksichtigung der räumlichen Intensitätsverteilung des Lichtstrahls so gewählt, dass die räumliche Verteilung der insgesamt empfangenen Lichtdosis über das Objekt vergleichmäßigt wird. Beispielsweise hat ein Laserstrahl in erster Näherung über seinen Strahlquerschnitt ein gaußförmiges Strahlprofil. Wird dieser Strahl am Mittelpunkt eines Objekts zentriert, so wird das Objekt mit einer inhomogenen Intensität bestrahlt. Ist das Objekt nicht homogen aufgebaut, sondern hat beispielsweise in der Mitte eine andere Materialzusammensetzung als am Rand, so ist in der vom Objekt erhaltenen Antwort auf die Bestrahlung dieser Materialkontrast mit einem Artefakt durch die inhomogene Bestrahlungsintensität überlagert. Dies tritt insbesondere bei eukaryotischen biologischen Zellen als Objekten auf, bei denen der Zellkern aus einem anderen Material besteht als der Rest der Zelle. Derlei Artefakte werden durch das Zeitprogramm, das die empfangene Lichtdosis über das Objekt vergleichmäßigt, vorteilhaft minimiert.

In einer besonders vorteilhaften Ausgestaltung der Erfindung wird mindestens ein Raman-Spektrum des Objekts aus der Antwort auf die Bestrahlung ausgewertet. Bei der Raman-Streuung werden Photonen inelastisch an Molekülen gestreut, so dass Energie zwischen den Photonen und den Anregungszuständen des Moleküls ausgetauscht wird. Da diese Anregungszustände für jedes Molekül charakteristisch sind, liefert die Raman-Streuung einen molekülspezifischen "Fingerabdruck" des bestrahlten Bereichs. Hiermit können insbesondere in Zellen von biologischen Proben krankhafte Veränderungen, wie sie beispielsweise von Krebs herrühren können, sichtbar gemacht werden.

Die Kombination der Raman-Spektroskopie mit der Gewinnung der binären Objektmaske ermöglicht es, eine Raman-Reihenuntersuchung an einer Vielzahl von Zellen einer biologischen Probe zu automatisieren. Bislang konnten derartige Untersuchungen immer nur an wenigen Zellen einer Probe vorgenommen werden, da immer wieder im Wechsel ein Raman-Spektrum aufgenommen und anschließend die Probe relativ zum Fokus des Anregungslasers manuell bewegt werden musste, bevor dann an der nächsten interessierenden Zelle das nächste Raman-Spektrum aufgenommen werden konnte. Typischerweise wurden in einer derartigen Studie deutlich weniger als 100 Zellen untersucht. Indem es nunmehr praktikabel wird, alle in einem Übersichtsbild sichtbaren Zellen sukzessive zu untersuchen, kann die Untersuchung an 100.000 und mehr Zellen durchgeführt werden.

Das Ergebnis der Untersuchung ist dann statistisch deutlich besser belastbar, und die Untersuchung wird wegen des verminderten Personaleinsatzes preiswerter. Manche Untersuchungen werden mit dem solchermaßen erhöhten Durchsatz auch überhaupt erst möglich. Werden beispielsweise Zellen mit statistischen Methoden in verschiedene Klassen eingeteilt, so wird diese Einteilung umso zuverlässiger, je mehr Zellen untersucht werden können. Insbesondere hängt die Verlässlichkeit einer statistischen Klassifikationsmethode stark davon ab, wie viele Zellen in der Trainingsphase der Methode untersucht wurden. Beispielsweise können Zellen nach Zelltyp klassifiziert werden oder danach, ob es sich um gesunde Zellen oder um Tumorzellen handelt. Es kann beispielsweise auch ein Hämogramm von weißen Blutzellen angefertigt werden.

Sollen seltene Veränderungen erkannt werden, die beispielsweise nur bei einer Zelle pro 1.000 oder pro 10.000 Zellen auftreten, so ist der erfindungsgemäß gesteigerte Durchsatz ebenfalls unerlässlich, um eine belastbare Aussage darüber treffen zu können, ob in einer biologischen Probe die konkrete Veränderung vorliegt.

Zusätzlich können auch andere Informationen aus den Zellen gewonnen werden, wie beispielsweise der relative Gehalt an Protein, Nukleinsäure und Lipid, oder auch der aktuelle Stand des Zellzyklus.

Zugleich werden Schnelluntersuchungen im klinischen Bereich möglich, da die Geschwindigkeit des Wechsels von einer Zelle zur nächsten nicht durch die menschliche Reaktionszeit eingeschränkt ist. Ein zur Durchführung des Verfahrens gemäß der Erfindung ausgebildetes Analysegerät kann weiterhin ohne manuelles Begutachten von Bildern oder Festlegen von Parametern vollautomatisch arbeiten und somit im klinischen Bereich auch von Personal ohne Vorkenntnisse bedient werden. Es müssen lediglich Zellen auf einem geeigneten Objektträger deponiert werden, und der Objektträger muss dem Gerät zugeführt werden.

Der Objektträger selbst als Substrat muss gegenüber früheren Untersuchungen nicht abgeändert werden. Er kann beispielsweise aus Glas, Quarz oder CaF$_2$ bestehen.

Wenn alle in der binären Objektmaske identifizierten Objekte untersucht sind, kann das Verfahren selbstverständlich automatisch mit einem neuen Gebiet wiederholt werden. Beispielsweise können auf einer größeren biologischen Probe sukzessive Gebiete, die in ihrer Größe jeweils dem räumlichen Erfassungsbereich für das Übersichtsbild entsprechen, untersucht werden. Aus dem Übersichtsbild kann jeweils in der beschriebenen Weise eine binäre Objektmaske gewonnen werden, und alle in dieser binären Objektmaske identifizierten Objekte (Zellen) können der Reihe nach automatisch in den Fokus des Anregungslasers gebracht und untersucht werden.

Alternativ oder auch in Kombination zur Aufnahme eines Raman-Spektrums kann beispielsweise auch durch den Laserstrahl eine Materialprobe vom Objekt abgedampft und einem Massenspektrometer zugeführt werden. Auf diese Weise kann das Material des Objekts elementspezifisch analysiert werden.

In einer weiteren besonders vorteilhaften Ausgestaltung der Erfindung werden die Zellen auf dem Substrat einem Einfluss ausgesetzt und wiederholt mit dem Lichtstrahl bestrahlt. Es wird jeweils die Antwort der Zellen auf die Bestrahlung ausgewertet.

Es kann beispielsweise die Entwicklung der Zellen unter dem Einfluss von chemischen Substanzen, der Inkorporation von Isotopen oder anderer Substanzen, die einen Einfluss auf die molekularen Schwingungsmoden aufweisen, aber auch ionisierender Bestrahlung oder Nährstoffreduktion oder auch eine Wechselwirkung zwischen verschiedenen auf dem Substrat vorhandenen Zelltypen studiert werden. Es können aber beispielsweise auch natürliche Prozesse, wie etwa Wachstums- und Vermehrungsprozesse, unter dem Einfluss des Zellkulturmediums, der Umgebungstemperatur oder einer erhöhten Bruttemperatur studiert werden. Weiterhin kann eine durch die Zusammensetzung der Inkubationsgase induzierte Veränderung der Zellen studiert werden.

Es wurde erkannt, dass die durch die Erfindung geschaffene Möglichkeit, verteilte Zellen auf einem Substrat in automatisierter Weise zu untersuchen, die Messunsicherheiten so weit reduziert, dass die Auswirkungen des Einflusses auf die Zellen aus den Antworten auf die Bestrahlung mit hinreichender statistischer Signifikanz ermittelt werden können. Nach dem bisherigen Stand der Technik mussten die verteilten Zellen für jede Messung zunächst manuell ausfindig gemacht und dann die lokale Bestrahlung für jede Zelle manuell ausgelöst werden. Dies war zum einen sehr personalintensiv, so dass die Anzahl der Zellen, die in die statistische Basis der Untersuchung einging, von vornherein beschränkt war. Indem nun stets eine statistisch relevante Anzahl von Zellen untersuchbar ist, wird eine Vielzahl an Untersuchungen, wie die Ermittlung von vorhandenen Populationen von Zellen, zum Beispiel bei der Untersuchung von Weißen Blutzellen oder Zellen, die in geringer Zahl in einer deutlich zahlreicheren Population anderer Zellen vorhanden sind, erstmals möglich gemacht. Weiterhin erlaubt der beschriebene Ansatz eine schnelle Analyse von Zellprozessen, bei denen die Vorgänge sehr rasant stattfinden und für die Messungen deshalb nur sehr kurze Zeitfenster zur Verfügung stehen. Zum anderen ist die Wiederholgenauigkeit bei manuell durchgeführten Untersuchungen begrenzt. Es gibt viele biologische Prozesse, die aber auch vergleichsweise langsam ablaufen, so dass zwischen zwei Untersuchungen, die an dem Substrat nach der Einwirkung unterschiedlicher Dosen des Einflusses vorgenommen werden, Stunden oder Tage liegen können. Nach dem bisherigen Stand der Technik waren die experimentellen Schwankungen bei manuell durchgeführten Messungen regelmäßig größer als die Veränderungen in den Antworten auf die Bestrahlung, die von dem auf die Zellen einwirkenden Einfluss herrührte. Die Schwankungen werden noch größer, wenn im Schichtbetrieb gearbeitet werden muss und der Bearbeiter zwischen den einzelnen Messungen wechselt. Auf der anderen Seite können bis jetzt keine Experimente durchgeführt werden, die über eine sehr lange Zeitskala, wie Tage oder sogar Wochen, stattfinden, da es für einen Benutzer nicht möglich ist, eine große Anzahl an Zellen manuell über so einen langen Zeitraum zu verfolgen und die gleichen Zellen über diesen Zeitraum zu betrachten.

Indem die Zellen nun automatisch wiedergefunden und untersucht werden können, ist es beispielsweise möglich, die Untersuchung rund um die Uhr in festen Zeitabständen unter immer gleichen experimentellen Bedingungen zu wiederholen.

Analoges gilt hier, da Zellen auf mehreren Substraten mit dem Lichtstrahl bestrahlt werden, wobei die Antworten der Zellen auf die Bestrahlung substratübergreifend zusammengeführt werden. Hier kommen bei der manuellen Versuchsdurchführung noch weitere Unsicherheiten hinzu, weil beispielsweise ein Mikroskop nach dem Einbau eines neuen Substrats jedes Mal etwas anders eingestellt wird.

In einer weiteren besonders vorteilhaften Ausgestaltung der Erfindung wird aus der Gesamtheit der Antworten mit einer multivariaten Analyse ausgewertet, welche Eigenschaften der Zellen sich unter dem ausgeübten Einfluss, und/oder von einem Substrat zum anderen, in statistisch signifikanter Weise ändern. Hier können insbesondere hyperspektrale Größen bestimmt werden, d.h., es kann automatisch bestimmt werden, welche Eigenschaften der Zellen sich in zueinander korrelierter Weise ändern. Die multivariate Analyse kann insbesondere ohne a-priori-Annahmen ("unsupervised") erfolgen.

Bei der multivariaten Analyse wird mitnichten an jedem Substrat einzeln ein Teilergebnis ermittelt, um schließlich die Teilergebnisse zusammenzuführen. Vielmehr wird die Analyse in einem Arbeitsgang an allen Antworten durchgeführt, die von den Zellen auf allen Substraten erhalten wurden. Damit das Ergebnis der Analyse nicht verwässert wird, ist es somit wichtig, dass alle Antworten unter gleichen experimentellen Bedingungen erhalten wurden. Somit macht die gemäß der Erfindung möglich gewordene Mechanisierung der Untersuchung einer Vielzahl von Zellen die multivariate Analyse überhaupt erst aussagekräftig.

Das Ergebnis einer solchen Analyse kann beispielsweise sein, dass Zellen unter der fortdauernden Einwirkung einer pharmakologischen Substanz bestimmte messbare Veränderungen erfahren, wobei diese Veränderungen mit der Zeit linear oder nicht linear voranschreiten, jedoch um so schneller, je größer die Konzentration der pharmakologischen Substanz ist. Im Umkehrschluss können dann beispielsweise die sich in einer derart korrelierten Weise verändernden Eigenschaften der Zellen als frühe Marker für das Einsetzen von Apoptose oder Nekrose erkannt werden. Es ist aber auch möglich, die Inkorporation von Substanzen, die in unterschiedlichen Konzentrationen vorliegen, in die Zellen zu betrachten und Rückschlüsse über die kinetischen Eigenschaften dieser Substanzen und die Zellkinetik zu ziehen. Dies könnten isotop-markierte Moleküle sein oder andere biochemische Substanzen, wie Fettsäuren und Proteine. Aus den Veränderungen können sich Rückschlüsse zur Aufnahmekinetik der Zellen ergeben.

Vorteilhaft wird die Principal Component Analysis, PCA, als multivariate Analyse gewählt. Hier kann beispielsweise ein als Antwort auf die Bestrahlung erhaltenes Raman-Spektrum in einem Resektionsmodell als gewichtete Superposition von mehreren Teilspektren aufgefasst werden, die jeweils von unterschiedlichen Beiträgen ("Loadings") herrühren. Die PCA transformiert letzten Endes die Originaldaten in ein Koordinatensystem, dessen Dimensionalität auf die voneinander linear unabhängigen Hauptkomponenten reduziert ist und bewirkt insofern eine starke Verdichtung der Originaldaten. Alternativ oder in Kombination hierzu können Spektren von reinen Komponenten mit Hilfe von Least Squares Fitting an die gemessenen Spektren angefittet werden.

In einer weiteren besonders vorteilhaften Ausgestaltung der Erfindung wird aus der multivariaten Analyse ein Klassifizierer ausgewertet, der den an Zellen auf einem weiteren Substrat erhaltenen Antworten auf die Bestrahlung mindestens einen für dieses Substrat zutreffenden Wert einer Eigenschaft zuordnet.

Beispielsweise kann durch Untersuchung einer Vielzahl von Substraten mit Zellen verschiedener Krebspatienten in Verbindung mit der Information, wie lange die Patienten nach der Entnahme der Zellen noch gelebt haben, diese Überlebensdauer als Anhaltspunkt für den Schweregrad der Erkrankung aufgefasst werden. Aus der multivariaten Analyse kann dann beispielsweise ein Klassifizierer ausgewertet werden, der Zellen auf einem weiteren Substrat mit einer bestimmten Trefferwahrscheinlichkeit zunächst die Eigenschaft, ob Krebs vorliegt oder nicht, und gegebenenfalls den Schweregrad zuordnet, beispielsweise in Klassen auf einer Skala von 1 bis 5. Es lassen sich aber mit dieser Methode auch die Zusammensetzung von Blut, sowie Veränderungen der Verhältnisse der sich im Blut befindlichen Zelltypen, analysieren. Weiterhin lässt sich durch diese Methode der Einfluss von unterschiedlichen pharmakologischen Substanzen auf die Zellen eines Patienten ermitteln, um zum Beispiel das richtige Therapeutikum zu bestimmen, im Sinne einer Personalisierten Medizin für den Patienten. In Bezug auf die Analyse von dem Einfluss von pharmakologischen Substanzen auf Zellen lassen sich aber auch die Konzentrationen ermitteln, ab denen eine Substanz toxisch auf die Zellen wirkt. Somit lässt sich ein Grenzwert für die Wirksamkeit der Substanz vorgeben. Der vorgeschlagene Ansatz erlaubt es aber auch, die Anreicherung von extern zugegebenen Substanzen oder Substanzen, die bei stattfindenden biologischen Prozessen entstehen, zu analysieren. Die vorgeschlagene Methode ermöglicht es weiterhin, die Anreicherung von Substanzen in Zellen unter unterschiedlichen Einflussfaktoren, wie Temperatur, Zusammensetzung des Zellkulturmediums, usw. festzustellen.

Der Klassifizierer kann beispielsweise mittels Linear Discriminant Analysis, LDA; oder Support Vector Machine, SVM, ausgewertet werden. Es können auch multivariate Regressionsuntersuchungen vorgenommen werden. Weiterhin können auch die Präsenz oder die Veränderung einer oder mehrere Substanzen, die vorher klar definiert wurden, auf den Substraten mit Hilfe des Least Squares Fitting bestimmt werden.

Es ist jeweils in organischer Weise möglich, die Ergebnisse mit Einflüssen zu korrelieren, die auf die Zellen ausgeübt wurden.

Die Erfindung bezieht sich auch auf ein Computerprogrammprodukt mit einem maschinenlesbaren Programm. Wenn das Programm auf einem Computer ausgeführt wird, werden der Computer und eine ggfs. daran angeschlossene Messapparatur veranlasst, das Verfahren gemäß der Erfindung auszuführen. Ein derartiges Computerprogrammprodukt kann insbesondere verwendet werden, um einen bestehenden Messplatz, an dem bislang Übersichtsbilder manuell ausgewertet wurden und an dem anschließend die Aufnahme von Raman-Spektren an einzelnen Zellen manuell ausgelöst wurde, zu automatisieren. Dadurch kann der Durchsatz dieses Messplatzes in Größenordnungen gesteigert werden, die bei manueller Bearbeitung illusorisch wären.

Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:

Figur 1: Ausführungsbeispiel des Verfahrens gemäß der Erfindung.
Figur 2: Ausführungsbeispiel für die automatische Bestimmung der Schwelle 208.
Figur 3: Skizze des Aufspaltens 240 einer gemeinsamen Grenze 1c aneinander grenzender Objekte 1a, 1b.
Figur 4: Bestrahlung 160 eines Objekts 1 mit Laserlicht 4 und Auswertung 170 der Antwort 5 zu einem Raman-Spektrum 6.

Figur 5: Vergleichmäßigung der vom Objekt 1 insgesamt empfangenen Lichtdosis durch Scannen 165 des Laserstrahls 4 nach einem Zeitprogramm anhand seines Strahlprofils 4a.
Figur 6: Substratübergreifendes Zusammenführen 190 von Antworten 5 der auf verschiedenen Substraten 10-12 sitzenden Objekte 1 auf die Bestrahlung 160.
Figur 7: Multivariate Analyse 192 zur Bestimmung korrelierter Eigenschaften 21-22, Auswertung 194 eines Klassifizierers 30 und Anwendung 195 dieses Klassifizierers 30.

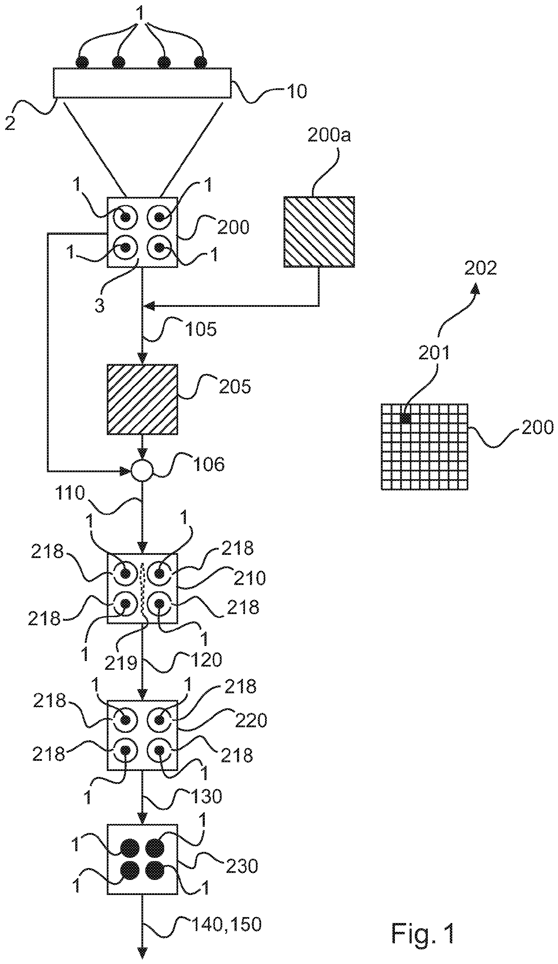

In Figur 1 ist der Ablauf eines Ausführungsbeispiels des Verfahrens gemäß der Erfindung skizziert. Auf einem Substrat 10 sind mehrere Zellen als Objekte 1 aufgebracht. Aus Gründen der Übersichtlichkeit werden im Folgenden auch bildliche Repräsentationen dieser Objekte 1 mit dem gleichen Bezugszeichen 1 bezeichnet.

Das Verfahren startet von einem Übersichtsbild 200 des Gebietes 2, in dem die Objekte 1 verteilt sind. Das Übersichtsbild 200 ist in Pixel 201 unterteilt, die jeweils mit Intensitätswerten 202 belegt sind. In dem Übersichtsbild 200 erscheinen die Objekte 1 auf einem Untergrund 3. Aus diesem Übersichtsbild 200 wird zunächst in einem ersten Schritt 105 durch Weichzeichnen eine Abschätzung 205 des Untergrundes 3 gewonnen. Die Abschätzung 205 kann alternativ oder in Kombination aus einem zweiten Übersichtsbild 200a gewonnen werden, das frei von Objekten 1 ist. Das ursprüngliche Übersichtsbild 200 wird im nächsten Schritt 106 durch Differenzbildung, bzw. durch punktweises Dividieren, mit der Untergrundabschätzung 205 verrechnet.

Aus dem Ergebnis, in dem der Kontrast der Objekte 1 deutlich erhöht ist, wird im nächsten Schritt 110 ein binäres Bild 210 gewonnen. In diesem binären Bild 210 gibt es keine Abstufungen von Intensitäten mehr, sondern nur noch die beiden Werte 0 und 1. Diese Diskretisierung hat zunächst zur Folge, dass in dem binären Bild 210 Lücken 218 in den Repräsentationen der Objekte 1 entstehen. Weiterhin werden auch aus Fehlern und Artefakten der Bildaufnahme Strukturen 219 erzeugt, die kleiner sind als die Objekte 1.

Damit die Strukturen 219 bei der weiteren Verarbeitung nicht derart anwachsen und zusammenwachsen, dass sie als weitere Objekte 1 fehlinterpretiert werden, wird das binäre Bild 210 im nächsten Schritt 120 um diese Strukturen 219 bereinigt. Es entsteht ein bereinigtes Bild 220.

Dieses bereinigte Bild 220 wird im nächsten Schritt 130 morphologisch geschlossen. In der hierbei entstehenden binären Objektmaske 230 erscheinen die Objekte 1 als ausgefüllte Flächen. Sollten derartige Flächen aneinander stoßen, so können diese in einem weiteren optionalen Schritt 140 voneinander getrennt werden. In einem weiteren optionalen Schritt 150 können außerdem Mittelpunkte von Objekten ausgewertet werden.

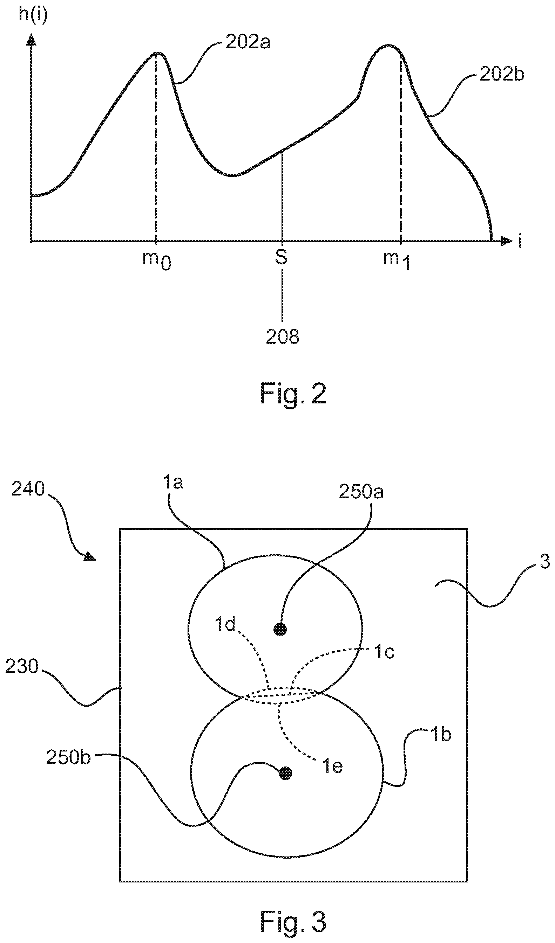

Figur 2 zeigt beispielhaft die Auswertung eines Histogramms der Intensitätswerte 202 der Pixel 201 eines Übersichtsbildes 200. Aufgetragen ist über jedem möglichen Intensitätswert i jeweils die Häufigkeit h(i) der Pixel 201 im Übersichtsbild 200, die die diesen Intensitätswert i tragen. Der Wert s für die Schwelle 208, der die Pixel 201 in die beiden Klassen "zu Objekten 1 gehörend" und "nicht zu Objekten 1 gehörend" trennt, liegt in der Mitte zwischen dem ersten Mittelwert $m_0$ derjenigen Intensitätswerte 202a, die unter dem Wert s liegen, und dem zweiten Mittelwert $m_1$ derjenigen Intensitätswerte 202b, die über dem Wert s liegen. Beide Mittelwerte $m_0$ und $m_1$ hängen wiederum vom Wert s der Schwelle 208 ab. Der Wert s ist daher selbstkonsistent zu bestimmen, beispielsweise durch Testen aller möglichen diskreten Werte zwischen dem minimalen und dem maximalen möglichen Intensitätswert 202, und/oder mit einem Optimierungsalgorithmus, der die Erfüllung der Selbstkonsistenzbedingung als Gütemaß verwendet.

Figur 3 illustriert den Schritt 240, in dem zwei aneinander angrenzende Objekte 1a und 1b in der binären Objektmaske 230 voneinander getrennt werden. Aus Gründen der Übersichtlichkeit sind die Objekte 1a und 1b in Figur 3 nicht als ausgefüllte Flächen gezeichnet, sondern es sind nur ihre Konturen dargestellt. Zusätzlich sind die Mittelpunkte 250a und 250b, die im optionalen Schritt 250 bestimmt wurden, eingezeichnet.

Die Objekte 1a und 1b grenzen entlang einer Linie 1c aneinander. Diese gemeinsame Grenze 1c wird in eine erste Grenze 1d des ersten Objekts 1a und eine hiervon beanstandete zweite Grenze 1e des zweiten Objekts 1b aufgespalten. In der solchermaßen überarbeiteten binären Objektmaske 230 berühren sich die Konturen der Objekte 1a und 1b also nicht mehr, sondern es besteht ein Zwischenraum von mindestens einem Pixel. Bei der weiteren Nutzung der binären Objektmaske 230 werden die beiden Objekte 1a und 1b also korrekterweise als getrennte Objekte 1 erkannt.

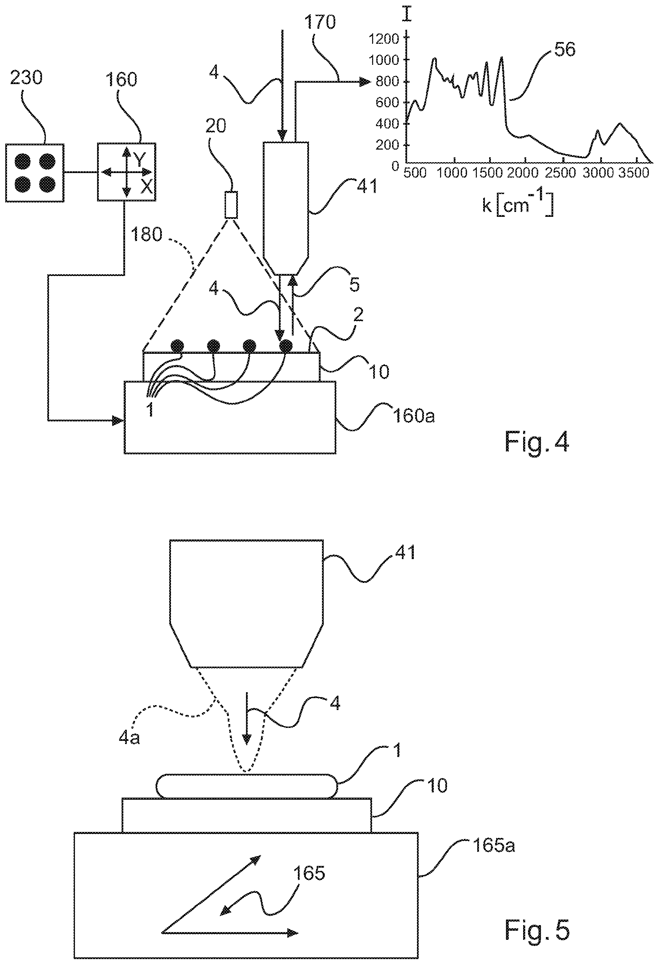

Figur 4 zeigt die weitere Untersuchung eines Objekts 1, das über die binäre Objektmaske 230 in dem Gebiet 2, in dem die Objekte 1 verteilt sind, lokalisiert wurde. In einem ersten Schritt 160 wird das Objekt 1 mit einem Laserstrahl 4 bestrahlt. Dies ist in dem in Figur 4 gezeigten Ausführungsbeispiel realisiert, indem das Substrat 10, auf dem die Objekte 1 verteilt sind, über eine X-Y-Positionssteuerung mit zugehörigem Positioniertisch 160a so verfahren wird, dass der aus einer Objektivlinse 41 austretende Laserstrahl 4 auf ein zuvor identifiziertes Objekt 1 auftrifft.

Dabei es für viele Anwendungen einerlei, ob die Objektivlinse 41 oder aber das Substrat 10 verfahren wird. Wenn die Raman-Streuung an einem Objekt 1 untersucht werden soll, sollte der Laserstrahl 4 jedoch möglichst genau auf der optischen Achse aus der Objektivlinse austreten, da ansonsten die chromatische Aberration ("spatial response") das Messergebnis verfälschen könnte. Es ist dann vorteilhaft, den Laserstrahl 4 genau zur optischen Achse der Objektivlinse 41 justiert zu lassen und stattdessen das Substrat 10 zu verfahren. Prinzipiell wäre es auch möglich, den Laser und die Objektivlinse 41 gemeinsam als eine Einheit zu verfahren, so dass der Laserstrahl 4 die optische Achse der Objektivlinse 41 nicht verlässt. Jedoch ist dies aufwändiger, da insbesondere ein Laser mit höherer Leistung erheblich schwerer und voluminöser ist als ein Substrat 10.

Die Antwort 5 des Objekts 1, hier Raman-gestreutes Licht, wird in einem zweiten Schritt 170 ausgewertet. Es entsteht ein molekülspezifisches Raman-Spektrum 6 des Objekts 1. Aufgetragen ist die Intensität I über der Wellenzahl k.

Optional kann gemäß Schritt 180 der Einfluss 20 auf die Objekte 1 ausgeübt werden. Sind die Objekte 1 beispielsweise Zellen, können sie beispielsweise einer Substanz, einer Temperatur, einer Bestrahlung oder einem Nährstoffmangel ausgesetzt werden. Beispielsweise kann ein vergleichsweise langsam wirkender Einfluss 20 fortwährend wirken, und währenddessen können die Objekte 1 auf dem Substrat 10 immer wieder mit den Schritten 160 und 170 untersucht werden. Die Ausübung eines schneller wirkenden Einflusses 20 kann sich beispielsweise mit der Untersuchung gemäß den Schritten 160 und 170 abwechseln.

Figur 5 verdeutlicht das Scannen 165 des Laserstrahls 4 nach einem Zeitprogramm anhand der Intensitätsverteilung 4a des Laserstrahls 4. Das Objekt 1 ist in dieser Illustration eine längliche ausgedehnte Struktur auf einem Substrat 10. Analog zu Figur 4 erfolgt das Scannen 165 wiederum dadurch, dass das Substrat 10 auf einem Positioniertisch 165a verfahren wird. Der aus der Objektivlinse 41 austretende Laserstrahl 4 hat ein Strahlprofil 4a, das in erster Näherung gaußförmig ist. Würde die Objektivlinse 41, und damit auch der Laserstrahl 4, an einer Position verharren, so würde nicht das ganze Objekt 1 bestrahlt. Selbst wenn der Fokus breit genug wäre, um das Objekt 1 komplett zu erfassen, würden die einzelnen Bereiche des Objekts 1 sehr unterschiedlich stark bestrahlt. In Verbindung mit einem Materialkontrast innerhalb des Objekts 1 könnte dies zu Artefakten bei der Untersuchung des Objekts 1 führen. Das Scannen 165 kompensiert die Wirkung des Strahlprofils 4a und vermeidet so die Artefakte.

Prinzipiell kann das Strahlprofil 4a des Laserstrahls 4 auch homogenisiert werden, indem der Laserstrahl 4 aufgeweitet wird und/oder indem mehrere Moden überlagert werden ("mode scrambling"). Die Verwendung eines gaußförmigen Strahls bietet jedoch den Vorteil, dass mit konfokalen Abbildungstechniken gearbeitet werden kann und insbesondere auch Tiefenprofile des Objekts 1 erstellt werden können.

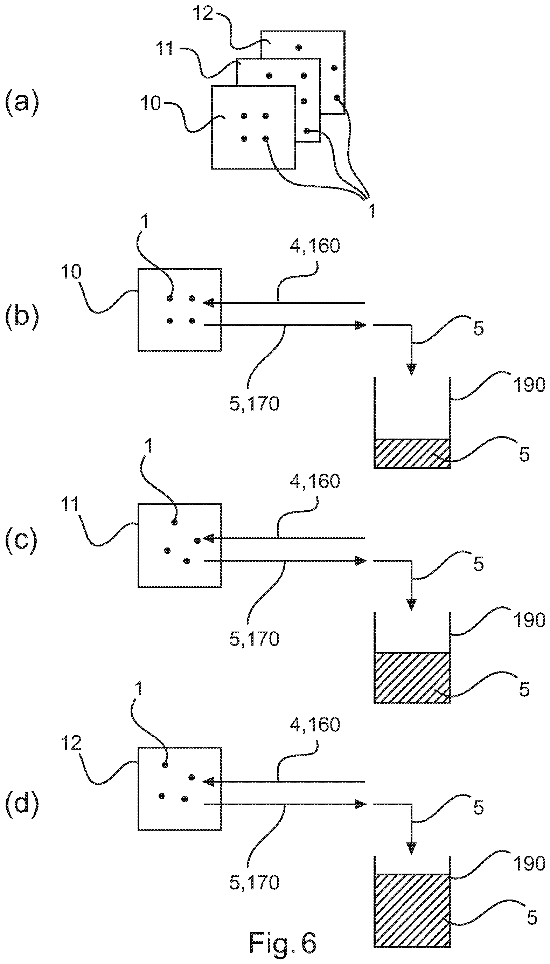

Figur 6 zeigt schematisch die Zusammenführung der an mehreren Substraten 10-12 gewonnenen Information. Figur 6a zeigt drei Substrate 10, 11 und 12, die jeweils unterschiedliche Verteilungen von Objekten 1 enthalten, die beispielsweise aus unterschiedlichen Blutproben entnommen wurden oder unterschiedlichen Substanzen ausgesetzt worden sind.

Gemäß Figur 6b werden zunächst die Objekte 1 auf dem ersten Substrat 10 jeweils nach Schritt 160 mit Licht 4 bestrahlt, und es wird nach Schritt 170 die Antwort 5 auf die Bestrahlung 160 ausgewertet. In Schritt 190 werden die von allen Objekten 1 erhaltenen Antworten 5 zusammengeführt.

Gemäß Figur 6c werden nun die Objekte 1 auf dem zweiten Substrat 11 in analoger Weise untersucht, und die erhaltenen Antworten 5 werden in Schritt 190 mit den zuvor erhaltenen Antworten 5 zusammengeführt, was in Figur 6c durch einen gegenüber Figur 6b erhöhten Füllstand an Antworten 5 angedeutet ist.

Gemäß Figur 6d werden nun auch die Objekte 1 auf dem dritten Substrat 12 untersucht, und die erhaltenen Antworten 5 werden in Schritt 190 mit allen bislang erhaltenen Antworten 5 zusammengeführt. Figur 6d verdeutlicht dies mit einem gegenüber Figur 6c abermals erhöhten Füllstand an Antworten 5.

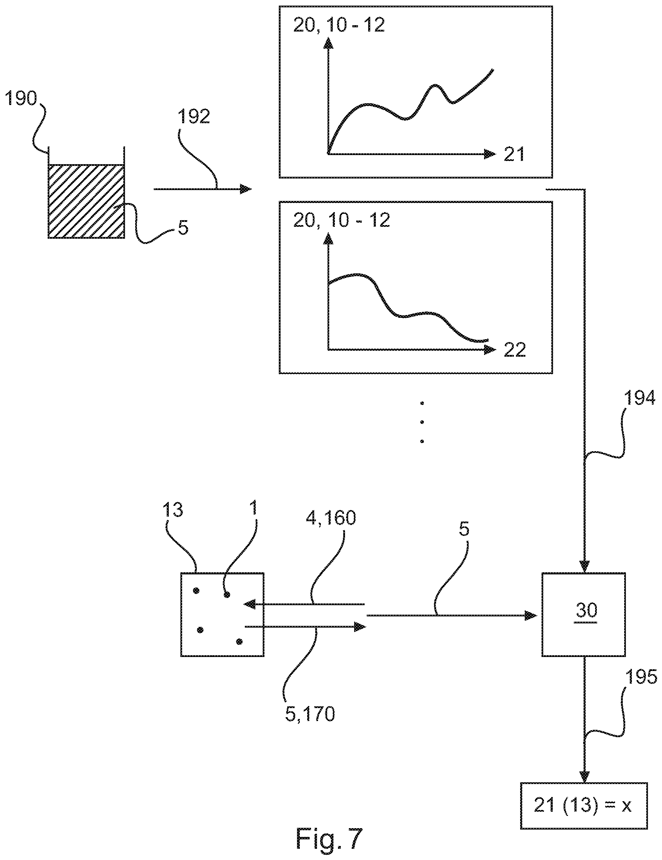

Figur 7 zeigt schematisch die weitere Auswertung der durch wiederholte Ausführung von Schritt 190 gesammelten Antworten 5 von den Objekten 1 auf allen drei Substraten 10-12.

In Schritt 192 werden die Antworten 5 mittels einer multivariaten Analyse ausgewertet. Das Ergebnis dieser Analyse ist, dass eine Reihe von Eigenschaften, von denen in Figur 7 zwei Eigenschaften 21 und 22 beispielhaft skizziert sind, mit einem auf die Substrate 10-12 ausgeübten Einfluss 20, oder in sonstiger Weise mit der Zugehörigkeit des jeweils untersuchten Objekts 1 zu einem der Substrate 10-12, korreliert ist.

Durch weitere Auswertung der in Schritt 192 erhaltenen multivariaten Analyse gemäß Schritt 194 wird ein Klassifizierer 30 erhalten. Mit Hilfe des Klassifizierers 30 können die Objekte 1 auf weiteren Substraten 13 analysiert werden. Den in analoger Weise zu den Figuren 6b bis 6d erhaltenen Antworten 5 dieser Objekte 1 auf die Bestrahlung 160 wird von dem Klassifizierer 30 in dem in Figur 7 gezeigten Beispiel die Aussage entnommen, dass der Wert der Eigenschaft 21 für die Objekte 1 auf dem Substrat 13 gleich x ist. Ebenso kann der Klassifizierer 30 beispielsweise Aussagen liefern, dass die Objekte 1 auf dem Substrat 13 am meisten Ähnlichkeit mit den Objekten 1 auf dem Substrat 10 haben, jedoch am wenigsten Ähnlichkeit mit den Objekten 1 auf dem Substrat 11.

**Bezugszeichenliste**

| | |
|---|---|
| 1, 1a, 1b | Objekte |
| 1c | Grenze zwischen aneinander grenzenden Objekten 1a, 1b |
| 1d | neue Grenze des Objekts 1a |
| 1e | neue Grenze des Objekts 1b |
| 2 | Gebiet, in dem Objekte 1 verteilt sind |
| 3 | Untergrund |
| 4 | Lichtstrahl |
| 4a | Intensitätsverteilung des Lichtstrahls 4 |
| 5 | Antwort des Objekts 1 auf den Lichtstrahl |
| 6 | Raman-Spektrum |
| 10-13 | Substrate |
| 20 | Einfluss |
| 30 | Klassifizierer |
| 41 | Objektivlinse |
| 105 | Gewinnung der Abschätzung 205 des Untergrundes 3 |
| 106 | Verrechnung von Abschätzung 205 und Übersichtsbild 200 |
| 108 | Festlegung der Schwelle 208 |
| 110 | Erzeugung des binären Bildes 210 |
| 120 | Bereinigung des binären Bildes 210 |
| 130 | morphologisches Schließen |
| 140 | Aufspalten einer gemeinsamen Grenze 1c in Grenzen 1d und 1e |
| 150 | Auswertung von Mittelpunkten 250a, 250b |
| 160 | Bestrahlung des Objekts 1 mit dem Lichtstrahl 4 |
| 160a | Positioniertisch für Bestrahlung 160 |
| 165 | Scannen des Lichtstrahls 4 |
| 165a | Positioniertisch für Scannen 165 |
| 170 | Auswertung der Antwort 5 des Objekt 1 auf den Lichtstrahl 4 |
| 180 | Ausübung des Einflusses 20 auf die Objekte 1 |
| 190 | substratübergreifendes Zusammenführen der Antworten 5 |
| 192 | multivariate Analyse |
| 194 | Auswertung des Klassifizierers 30 |
| 195 | Zuordnung einer Eigenschaft durch den Klassifizierer 30 |
| 200 | Übersichtsbild des Gebiets 2 |
| 200a | zweites Übersichtsbild des Gebiets 2 ohne Objekte 1 |
| 201 | Pixel des Übersichtsbildes 200 |
| 202 | Intensitätswerte der Pixel 201 |
| 202a | Intensitätswerte 202 diesseits der Schwelle 208 |
| 202b | Intensitätswerte 202 jenseits der Schwelle 208 |
| 205 | Abschätzung des Untergrundes 3 |
| 208 | Schwelle |
| 210 | binäres Bild |
| 218 | Lücken in den Konturen der Objekte 1 im binären Bild 210 |
| 219 | Strukturen kleiner als Objekte 1 im binären Bild 210 |
| 220 | bereinigtes Bild |
| 230 | binäre Objektmaske |
| 250a, 250b | Mittelpunkte von Objekten 1a, 1b |
| h(i) | Häufigkeit eines Intensitätswerts i unter den Pixeln 201 |
| i | Intensitätswert |
| I | Intensität |
| k | Wellenzahl |

$m_0$ erster Mittelwert der Intensitätswerte 202a

$m_1$ zweiter Mittelwert der Intensitätswerte 202b

s Wert der Schwelle 208

## Patentansprüche

1. Verfahren zur Untersuchung einer Vielzahl verteilter Objekte (1) unter Nutzung eines Übersichtsbildes (200) des Gebiets (2), in dem die Objekte (1) verteilt sind, wobei

   • das Übersichtsbild (200) in ein binäres Bild (210) umgewandelt wird (110), indem die Intensitätswerte (202) der Pixel (201) des Übersichtsbildes (200) dahingehend klassifiziert werden (202a, 202b), ob sie diesseits oder jenseits einer vorgegebenen Schwelle (208) liegen;
   • das binäre Bild (210) um Strukturen (219), die kleiner sind als die Objekte (1), bereinigt wird (120), so dass ein bereinigtes Bild (220) entsteht; und
   • das bereinigte Bild (220) morphologisch geschlossen wird (130), so dass eine binäre Objektmaske (230) entsteht, die angibt, welche Orte des Gebiets (2) zu Objekten (1) gehören und welche Orte des Gebiets (2) zu keinem Objekt gehören, und
   • auf einem Substrat (10) verteilte biologische Zellen, bevorzugt eukaryotische Zellen, als Objekte (1) gewählt werden, wobei
   • mindestens ein Ort in dem Gebiet (2), an dem sich laut der binären Objektmaske (230) eine Zelle (1) befindet, automatisiert mit einem Lichtstrahl (4), bevorzugt mit einem Laserstrahl, bestrahlt wird (160) und die Antwort (5) der Zelle (1) auf die Bestrahlung (160) ausgewertet wird (170), und wobei
   • Zellen (1) auf mehreren Substraten (10-12) mit dem Lichtstrahl (4) bestrahlt werden (160), **dadurch gekennzeichnet, dass**
   • die Schwelle (208) derart festgelegt wird (108), dass die Übereinstimmung mindestens eines statistischen Moments des binären Bildes (210) mit dem entsprechenden statistischen Moment des Übersichtsbildes (200) maximiert wird; und
   • die Antworten (5) der Zellen (1) auf die Bestrahlung (160) substratübergreifend zusammengeführt werden (190),
   • wobei das Zusammenführen (190) beinhaltet, dass aus der Gesamtheit der Antworten (5) mit einer multivariaten Analyse ausgewertet wird (192), welche Eigenschaften (21-22) der Zellen (1) sich von einem Substrat (10-12) zum anderen in statistisch signifikanter Weise ändern.

2. Verfahren nach Anspruch 1, **dadurch gekennzeichnet, dass** die Schwelle (208) derart festgelegt wird (108), dass sie in der Mitte zwischen einem ersten Mittelwert $m_0$ aller Intensitätswerte (202a) von Pixeln (201a) des Übersichtsbildes (200), die unterhalb der Schwelle (208) liegen, und einem zweiten Mittelwert $m_1$ aller Intensitätswerte (202b) von Pixeln (201b) des Übersichtsbildes (200), die oberhalb der Schwelle (208) liegen, liegt.

3. Verfahren nach einem der Ansprüche 1 bis 2, **dadurch gekennzeichnet, dass** die Schwelle (208) derart festgelegt wird (108), dass

   • die Summe aus einer ersten Varianz aller Intensitätswerte (202a) von Pixeln (201a) des Übersichtsbildes (200), die unterhalb der Schwelle (208) liegen, gewichtet mit der Anzahl dieser Intensitätswerte (202a), und einer zweiten Varianz aller Intensitätswerte (202b) von Pixeln (201b) des Übersichtsbildes (200), die oberhalb der Schwelle (208) liegen, gewichtet mit der Anzahl dieser Intensitätswerte (202b), minimiert wird, und/oder
   • die Interklassenvarianz zwischen den unterhalb der Schwelle (208) liegenden Intensitätswerten (202a) einerseits und den oberhalb der Schwelle (208) liegenden Intensitätswerten (202b) andererseits maximiert wird.

4. Verfahren nach einem der Ansprüche 1 bis 3, **dadurch gekennzeichnet, dass** eine, bevorzugt defokussierte, mikroskopische Hellfeldaufnahme des Gebiets (2) als Übersichtsbild (200) gewählt wird.

5. Verfahren nach einem der Ansprüche 1 bis 4, **dadurch gekennzeichnet, dass** aus dem Übersichtsbild (200) durch Weichzeichnen mit einer Stärke, die die Zellen (1) im Wesentlichen entfernt, eine Untergrundabschätzung (205) gewonnen wird (105) und das Übersichtsbild (200) vor der Umwandlung (110) in das binäre Bild (210) durch seine Differenz zu der Untergrundabschätzung (205) ersetzt wird (106).

6. Verfahren nach einem der Ansprüche 1 bis 5, **dadurch gekennzeichnet, dass** eine Untergrundabschätzung (205) durch Aufnahme eines zweiten Übersichtsbildes (200a), welches frei von Zellen (1) ist, gewonnen wird (105) und das Übersichtsbild (200) vor der Umwandlung (110) in das binäre Bild (210) punktweise durch die Untergrundabschätzung (205) dividiert wird (106).

7. Verfahren nach einem der Ansprüche 1 bis 6, **dadurch gekennzeichnet, dass** in der binären Objektmaske (230) mindestens eine gemeinsame Grenze (1c) aneinander grenzender Zellen (1a, 1b) in eine erste Grenze (1d) der ersten Zelle (1a) und eine hiervon beabstandete zweite Grenze (1e) der zweiten Zelle (1b) aufgespalten wird (140), insbesondere mittels Wasserscheidentransformation.

8. Verfahren nach einem der Ansprüche 1 bis 7, **dadurch gekennzeichnet, dass** aus der binären Objektmaske (230) der Mittelpunkt (250a, 250b) mindestens einer Zelle (1) ausgewertet wird (150).

9. Verfahren nach einem der Ansprüche 1 bis 8, **dadurch gekennzeichnet, dass** der Lichtstrahl (4) an Hand der binären Objektmaske (230) relativ zur Zelle (1) gescannt wird (165), wobei das Zeitprogramm des Scannens unter Berücksichtigung der räumlichen Intensitätsverteilung (4a) des Lichtstrahls (4) so gewählt wird, dass die räumliche Verteilung der insgesamt empfangenen Lichtdosis über die Zelle (1) vergleichmäßigt wird.

10. Verfahren nach einem der Ansprüche 1 bis 9, **dadurch gekennzeichnet, dass** mindestens ein Raman-Spektrum (6) der Zelle (1) aus der Antwort (5) auf die Bestrahlung (160) ausgewertet wird (170).

11. Verfahren nach einem der Ansprüche 1 bis 10, **dadurch gekennzeichnet, dass** die Zellen (1) auf dem Substrat (10) einem Einfluss (20) ausgesetzt werden (180), wobei die Zellen (1) wiederholt mit dem Lichtstrahl (4) bestrahlt werden (160) und jeweils die Antwort (5) der Zellen (1) auf die Bestrahlung (160) ausgewertet wird (170).

12. Verfahren nach Anspruch 11, **dadurch gekennzeichnet, dass** aus der Gesamtheit der Antworten (5) mit der multivariaten Analyse zusätzlich ausgewertet wird (192), welche Eigenschaften (21-22) der Zellen (1) sich unter dem Einfluss (20) in statistisch signifikanter Weise ändern.

13. Verfahren nach einem der Ansprüche 1 bis 12, **dadurch gekennzeichnet, dass** die Principal Component Analysis, PCA, als multivariate Analyse gewählt wird, und/oder dass Spektren von reinen Komponenten an die gemessenen Spektren mit Hilfe von Least Squares Fitting angefittet werden.

14. Verfahren nach einem der Ansprüche 1 bis 13, **dadurch gekennzeichnet, dass** aus der multivariaten Analyse (192) ein Klassifizierer (30) ausgewertet wird (194), der den an Zellen (1) auf einem weiteren Substrat (13) erhaltenen Antworten (5) auf die Bestrahlung (160) mindestens einen für dieses Substrat (13) zutreffenden Wert einer Eigenschaft (21-22) zuordnet (195).

15. Verfahren nach Anspruch 14, **dadurch gekennzeichnet, dass** der Klassifizierer (30) mittels Linear Discriminant Analysis, LDA, oder Support Vector Machine, SVM, ausgewertet wird (194).

16. Computerprogrammprodukt, enthaltend ein maschinenlesbares Programm mit Anweisungen, die, wenn das Programm auf einem Computer ausgeführt wird, den Computer und eine ggfs. daran angeschlossene Messapparatur veranlassen, ein Verfahren nach einem der Ansprüche 1 bis 15 auszuführen.

**Claims**

1. A method for examining a plurality of distributed objects (1) using an overview image (200) of the area (2) in which the objects (1) are distributed, wherein

   • the overview image (200) is converted (110) into a binary image (210) by classifying (202a, 202b) the intensity values (202) of the pixels (201) of the overview image (200) as to whether they lie on this side or on the other side of a predetermined threshold (208);
   • the binary image (210) is cleaned (120) of structures (219) that are smaller than the objects (1), so that a cleaned image (220) results; and
   • the cleaned image (220) is morphologically closed (130), so that a binary object mask (230) results and indicates which locations of the area (2) belong to objects (1) and which locations belong to no object, and
   • biological cells, preferably eukaryotic cells, distributed on a substrate (10) are chosen as objects (1), wherein
   • at least one location in the area (2) at which, according to the binary object mask (230), a cell (1) is located is irradiated (160) in an automated manner with a light beam (4), preferably with a laser beam, and the response (5) of the cell (1) to the irradiation (160) is evaluated (170), and wherein
   • cells (1) on several substrates (10-12) are irradiated (160) with the light beam (4),
   **characterized in that**
   • the threshold (208) is fixed (108) such that the agreement of at least one statistical moment of the binary image (210) with the corresponding statistical moment of the overview image (200) is maximized; and
   • the responses (5) of the cells (1) to the irradiation (160) are aggregated (190) across multiple substrates,
   • wherein the aggregating (190) comprises evaluating (192), with a multivariate analysis, from the whole of the responses (5), which properties (21-22) of the cells (1) change in a statistically significant manner from one substrate (10-12) to the other.

2. The method of claim 1, **characterized in that** the threshold (208) is fixed (108) such that it lies in the middle between a first mean value $m_0$ of all intensity values (202a) of pixels (201a) of the overview image (200) that lie below the threshold (208), and a second mean value $m_1$ of all intensity values (202b) of pixels (201b) of the overview image (200) that lie above the threshold (208).

3. The method of any one of claims 1 to 2, **characterized in that** the threshold (208) is fixed (108) such that

   • the sum of a first variance of all intensity values (202a) of pixels (201a) of the overview image (200) that lie below the threshold (208), weighted with the number of these intensity values (202a), and a second variance of all intensity values (202b) of pixels (201b) of the overview image (200) that lie above the threshold (208), weighted with the number of these intensity values (202b), is minimized, and/or
   • the inter-class variance between the intensity values (202a) lying below the threshold (208) on the one hand, and the intensity values (202b) lying above the threshold (208) on the other hand, is maximized.

4. The method of any one of claims 1 to 3, **characterized in that** a microscopic bright-field image, and preferably a defocused one, of the area (2) is chosen as overview image (200).

5. The method of any one of claims 1 to 4, **characterized in that** a background estimate (205) is obtained from the overview image (200) by soft-focus effect with a strength that substantially removes the cells (1), and the overview image (200) is replaced (106) by its difference to the background estimate (205) before the converting (110) into the binary image.

6. The method of any one of claims 1 to 5, **characterized in that** a background estimate (205) is obtained (105) by recording a second overview image (200a) that is free of cells (1), and the overview image is divided (106) point-wise by the background estimate (205) before the converting (110) into the binary image (210).

7. The method of any one of claims 1 to 6, **characterized in that** in the binary object mask (230), at least one common boundary (1c) of cells (1a, 1b) bordering each other is split (140), in particular by watershed transform, into a first boundary (1d) of the first cell (1a) and a second boundary (1e) of the second cell (1b) spaced therefrom.

8. The method of any one of claims 1 to 7, **character-**

ized in that the center point (250a, 250b) of at least one cell (1) is evaluated (150) from the binary object mask (230).

9. The method of any one of claims 1 to 8, **characterized in that** the light beam (4) is scanned (165) relative to the cell (1) according to the binary object mask (230), wherein the time program of the scanning is chosen, under consideration of the spatial intensity distribution (4a) of the light beam (4), such that the spatial distribution of the total received light dose is equalized over the cell (1).

10. The method of any one of claims 1 to 9, **characterized in that** at least one Raman spectrum (6) of the cell (1) is evaluated (170) from the response (5) to the irradiation (160).

11. The method of any one of claims 1 to 10, **characterized in that** the cells (1) on the substrate (10) are exposed (180) to an influence (20), wherein the cells (1) are irradiated (160) with the light beam (4) repeatedly, and each time the response (5) of the cells (1) to the irradiation (160) is evaluated (170).

12. The method of claim 11, **characterized in that** from the whole of the responses (5), it is additionally evaluated (192), with the multivariate analysis, which properties (21-22) of the cells (1) change in a statistically significant manner under the influence (20).

13. The method of any one of claims 1 to 12, **characterized in that** the Principal Component Analysis, PCA, is chosen as multivariate analysis, and/or that spectra of pure components are fitted to the measured spectra with the aid of Least Squares Fitting.

14. The method of any one of claims 1 to 13, **characterized in that** from the multivariate analysis (192), a classifier (30) is evaluated (194) that assigns (195), to the responses (5) to the irradiation (160) obtained on cells (1) on a further substrate (13), at least one value of a property (21-22) that is appropriate for this substrate (13).

15. The method of claim 14, **characterized in that** the classifier (30) is evaluated (194) using Linear Discriminant Analysis, LDA, or Support Vector Machine, SVM.

16. A computer program product, comprising a machine-readable program with instructions that, when the program is executed on a computer, cause the computer, and a measuring apparatus connected thereto as the case may be, to perform the method of any one of claims 1 to 15.

**Revendications**

1. Procédé pour évaluer une pluralité d'objets (1) répartis en utilisant une image de vue d'ensemble (200) de la zone (2) dans laquelle les objets (1) sont répartis,

   • l'image de vue d'ensemble (200) étant convertie (110) en une image binaire (210) en classant (202a, 202b) les valeurs d'intensité (202) des pixels (201) de l'image de vue d'ensemble (200) selon qu'elles se trouvent en deçà ou au-delà d'un seuil (208) prédéterminé ;
   • l'image binaire (210) est nettoyée (120) des structures (219) qui sont plus petites que les objets (1), de manière à obtenir une image nettoyée (220) ; et
   • l'image nettoyée (220) est fermée morphologiquement (130), de sorte qu'un masque d'objet binaire (230) soit créé, qui indique quels endroits de la zone (2) possèdent des objets (1) et quels endroits de la zone (2) ne possèdent pas d'objets, et
   • des cellules biologiques, de préférence des cellules eucaryotes, réparties sur un substrat (10) sont choisies en tant qu'objets (1),
   • au moins un endroit de la zone (2) dans lequel se trouve une cellule (1) selon le masque d'objet binaire (230) est irradié (160) de manière automatisée avec un faisceau lumineux (4), de préférence avec un faisceau laser, et la réponse (5) de la cellule (1) à l'irradiation (160) est évaluée (170), et
   • des cellules (1) sur plusieurs substrats (10-12) sont irradiées (160) avec le faisceau lumineux (4),
   **caractérisé en ce que**
   • le seuil (208) est fixé (108) de manière à maximiser la correspondance d'au moins un moment statistique de l'image binaire (210) avec le moment statistique correspondant de l'image de vue d'ensemble (200) ; et
   • les réponses (5) des cellules (1) à l'irradiation (160) sont fusionnées (190) pour l'ensemble du substrat,
   • la fusion (190) comprenant le fait (192) d'évaluer, à partir de l'ensemble des réponses (5), des propriétés (21-22) des cellules (1) qui changent d'un substrat (10-12) à l'autre de manière statistiquement significative.

2. Procédé selon la revendication 1, **caractérisé en ce que** le seuil (208) est déterminé (108) de telle sorte qu'il se situe à mi-chemin entre une première valeur moyenne $m_0$ de toutes les valeurs d'intensité (202a) des pixels (201a) de l'image de vue d'ensemble (200) qui se situent en dessous du seuil (208) et une deuxième valeur moyenne $m_1$ de toutes les valeurs d'intensité (202b) des pixels (201b) de l'image de vue d'ensemble (200) qui se situent au-dessus du seuil (208).

3. Procédé selon l'une des revendications 1 à 2, **caractérisé en ce que** le seuil (208) est fixé (108) de telle sorte que

   • la somme d'une première variance de toutes les valeurs d'intensité (202a) des pixels (201a) de l'image de vue d'ensemble (200) situées en dessous du seuil (208), pondérée par le nombre de ces valeurs d'intensité (202a), et d'une deuxième variance de toutes les valeurs d'intensité (202b) des pixels (201b) de l'image de vue d'ensemble (200) situées au-dessus du seuil (208), pondérée par le nombre de ces valeurs d'intensité (202b), est minimisée, et/ou
   • la variance interclasse entre les valeurs d'intensité (202a) situées en dessous du seuil (208), d'une part, et les valeurs d'intensité (202b) situées au-dessus du seuil (208), d'autre part, est maximisée.

4. Procédé selon l'une des revendications 1 à 3, **caractérisé en ce qu'**une image microscopique en champ clair, de préférence défocalisée, de la zone (2) est choisie en tant qu'image de vue d'ensemble (200).

5. Procédé selon l'une des revendications 1 à 4, **caractérisé en ce qu'**une évaluation d'arrière-plan (205) est obtenue (105) à partir de l'image de vue d'ensemble (200) par floutage avec une intensité qui élimine sensiblement les cellules (1), et l'image de vue d'ensemble (200) est remplacée (106) par sa différence avec l'estimation d'arrière-plan (205) avant la conversion (110) en l'image binaire (210).

6. Procédé selon l'une des revendications 1 à 5, **caractérisé en ce qu'**une évaluation d'arrière-plan (205) est obtenue (105) en prenant une deuxième image (200a) de vue d'ensemble exempte de cellules (1) et en divisant (106) l'image de vue d'ensemble (200) par l'évaluation d'arrière-plan (205), point par point, avant la conversion (110) en l'image binaire (210).

7. Procédé selon l'une des revendications 1 à 6, **caractérisé en ce que**, dans le masque d'objet binaire (230), au moins une limite commune (1c) de cellules adjacentes (1a, 1b) est divisée (140) en une première limite (1d) de la première cellule (1a) et une deuxième limite (1e) de la deuxième cellule (1b) espacée de la première, notamment au moyen d'une transformation de la couche d'eau.

8. Procédé selon l'une des revendications 1 à 7, **ca-**

ractérisé en ce que le point central (250a, 250b) d'au moins une cellule (1) est évalué (150) à partir du masque d'objet binaire (230).

9. Procédé selon l'une des revendications 1 à 8, caractérisé en ce que le faisceau lumineux (4) est balayé (165) à l'aide du masque objet binaire (230) par rapport à la cellule (1), le programme temporel du balayage étant choisi en tenant compte de la répartition spatiale de l'intensité (4a) du faisceau lumineux (4) de manière à uniformiser la répartition spatiale de la dose totale de lumière reçue sur la cellule (1).

10. Procédé selon l'une des revendications 1 à 9, caractérisé en ce qu'au moins un spectre Raman (6) de la cellule (1) est évalué (170) à partir de la réponse (5) à l'irradiation (160).

11. Procédé selon l'une des revendications 1 à 10, caractérisé en ce que les cellules (1) sont exposées (180) à une influence (20) sur le substrat (10), les cellules (1) étant irradiées (160) de manière répétée par le faisceau lumineux (4) et la réponse (5) des cellules (1) à l'irradiation (160) étant à chaque fois évaluée (170).

12. Procédé selon la revendication 11, caractérisé en ce que, à partir de l'ensemble des réponses (5), on évalue en outre (192), au moyen de l'analyse multivariée, quelles sont les propriétés (21-22) des cellules (1) qui se modifient de manière statistiquement significative sous l'influence (20).

13. Procédé selon l'une des revendications 1 à 12, caractérisé en ce que l'analyse en composantes principales, PCA, est choisie en tant qu'analyse multivariée, et/ou en ce que des spectres de composantes pures sont ajustés aux spectres mesurés en utilisant l'ajustement par les moindres carrés.

14. Procédé selon l'une des revendications 1 à 13, caractérisé en ce que, à partir de l'analyse multivariée (192), on évalue (194) un classificateur (30) qui attribue (195) aux réponses (5) à l'irradiation (160) obtenues sur des cellules (1) situées sur un autre substrat (13) au moins une valeur d'une propriété (21-22) applicable à ce substrat (13).

15. Procédé selon la revendication 14, caractérisé en ce que le classificateur (30) est évalué (194) au moyen d'une analyse discriminante linéaire, LDA, ou d'une machine vectorielle de support, SVM.

16. Produit de programme d'ordinateur comprenant un programme lisible par une machine avec des instructions qui, lorsque le programme est exécuté sur un ordinateur, amènent l'ordinateur et un appareil de mesure optionnellement connecté à celui-ci à mettre en oeuvre un procédé selon l'une quelconque des revendications 1 à 15.

Fig. 1

Fig. 2

Fig. 3

Fig. 4

Fig. 5

Fig.6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2423150 A
- WO 9316442 A1
- WO 0004497 A
- GB 2466818 A

**In der Beschreibung aufgeführte Nicht-Patentliteratur**

- **R. ALI ; M. GOODING ; T. SZILÄGYI ; B. VOJNOVIC ; M. CHRISTLIEB ; M. BRADY.** Automatic segmentation of adherent biological cell boundaries and nuclei from brightfield microscopy images. *Machine Vision and Applications,* 2011, vol. 23 (4), 607-621
- **F. BUGGENTHIN ; C. MARR ; M. SCHWARZFISCHER ; P. S. HOPPE ; O. HILSENBECK ; T. SCHROEDER ; F. J. THEIS.** An automatic method for robust and fast cell detection in bright field images from highthroughput microscopy. *BMC Bioinformatics,* 2013, vol. 14, 297-308
- **C. ZHANG ; J. YARKONY ; F. A. HAMPRECHT.** Cell Detection and Segmentation Using Correlation Clustering. *Medical Image Computing and Computer Assisted Intervention - MICCAI 2014, Lecutre Notes in Computer Science,* 2014, vol. 8673, 9-16
- Survey of Thresholding Techniques. **P. K. SAHOO et al.** Computer Vision Graphics and Image Processing. Academic Press, 1988, vol. 41, 233-260
- Targeting Cell Nuclei for the Automation of Raman Spectroscopy in Oncology. **J. BLACKLEDGE et al.** ISAST Transactions on Computers and Intelligent Systems. Dublin Institute of Technology, 2012, vol. 4, 42-51